# EUROPÄISCHE PATENTSCHRIFT

(11) **EP 0 634 878 B1**
(45) Veröffentlichungstag und Bekanntmachung des Hinweises auf die Patenterteilung: **30.08.2000**
(21) Anmeldenummer: 94110414.3
(22) Anmeldetag: 05.07.1994
(51) Int. Cl.: H04Q 3/66

(54) **Rückgeführte alternative Verkehrslenkung in einem Nachrichtennetz**
Alternate crankback routing in a communication network
Acheminement alternatif de reroutage dans un réseau de communication

(30) Priorität: 07.07.1993 DE 4322563
(43) Veröffentlichungstag der Anmeldung: 18.01.1995
(73) Patentinhaber: ALCATEL, 75008 Paris (FR)
(72) Erfinder: Kümmel, Klaus-Peter, D-70736 Fellbach (DE)
(74) Vertreter: Schätzle, Albin, Dipl.-Phys.

(56) Entgegenhaltungen:
- US-A- 5 058 105
- HEWLETT-PACKARD JOURNAL, Bd.40, Nr.1, Februar 1989, PALO ALTO US Seiten 42 - 49, XP28070 R. COACKLEY ET AL 'An Integrated Voice and Data Network Based on Virtual Circuits'
- CONFERENCE RECORD, IEEE MILITARY COMMUNICATIONS CONFERENCE MILCOM '85, 20-23 OKTOBER 1985, HEFT 3 SEITEN 660-666, BOSTON US R.P. LIPPMANN 'New Routing and Preepmtion Algorithms for Circuit-Switched Mixed-Media Networks'
- IEEE TRANSACTIONS ON RELIABILITY, Bd.40, Nr.4, Oktober 1991, NEW YORK US Seiten 404 - 416, XP232099 B.A. COAN ET AL 'Using Distributed Topology Update and Preplanned Configurations to Achieve Trunk Network Survivability'
- BELL SYSTEM TECHNICAL JOURNAL, Bd.60, Nr.8, Oktober 1981, NEW YORK US Seiten 1787 - 1820 G.R. ASH ET AL 'Design and Optimization of Networks with Dynamic Routing'

## Beschreibung

Die vorliegende Erfindung betrifft ein Verfahren zur Verkehrslenkung in einem Nachrichtennetz für vermittelte Verbindungen gemäß dem Oberbegriff des Patentanspruchs 1.

Ein solches Nachrichtennetz mit einer Vielzahl von Vermittlungsstellen ist häufig nicht vollvermascht. Die Wegabschnitte zwischen den einzelnen Vermittlungsstellen sind üblicherweise durch endlich bemessene Leitungsbündel realisiert. Eine Vielzahl von gleichzeitig vorhandenen Verbindungswünschen erfordert daher eine Verkehrslenkung, um aus einer bestimmen Anzahl von Wegmöglichkeiten einen Weg zur Realisierung des aktuellen Verbindungswunsches auszuwählen.

In "K. Bergmann, Lehrbuch der Fernmeldetechnik, 5. Auflage, S. 214-217" ist ein Prinzip der alternativen Verkehrslenkung beschrieben. Bei der alternativen Verkehrslenkung werden die Wegabschnitte für den Aufbau einer Verbindung zwischen einer Ursprungs- und einer Zielvermittlungsstelle schrittweise von Vermittlungsstelle zu Vermittlungsstelle auf ihre Belegbarkeit überprüft. Jede Vermittlungsstelle kennt dabei ausschließlich den Belegungszustand der von ihr ausgehenden Leitungsbündel. Aufgrund einer Blockierung des Wegabschnitts zwischen zwei Vermittlungsstellen und fehlendem oder gescheitertem Überlauf wird die gewünschte Verbindung zwangsläufig ausgelöst. Die Vermittlungsstelle, die die Blockierung des Wegabschnitts feststellt, sendet dazu ein Zeichengabesignal zur Ursprungsvermittlungsstelle

Nach einem im CCITT-Blue Book "Telephone network and ISDN-operation, numbering, routing and mobile service", Melbourne 14.-25. Nov. 1988, Vol. II, Fascicle II.2-Rec. E. 170, Kapitel 4.2, S. 161, ISBN 92-61-03261-3 beschriebenen Verfahren des "Automatic rerouting (crankback)" wird nach dem Empfang dieses Zeichengabesignals versucht, die gewünschte Verbindung mittels einer wiederholten Verkehrslenkung auf alternativen Wegen von der Ursprungsvermittlungsstelle aus aufzubauen.

In der 1985 IEEE MILITARY COMMUNICATIONS CONFERENCE MILCOM'85 wurde am 23. Oktober 1985 von Richard P. Lippmann über "New Routing and Preemption Algorithms for Circuit-Switched Mixed-Media Networks" berichtet. Im ersten und einfachsten der dort vorgestellten neuen Algorithmen können "switches ... optionally crank a call back to a previous switch in the call path if no outgoing links are available". Dieser Bericht ist veröffentlicht im zugehörigen Conference Record, Band 3, Seiten 660-666.

Es ist die Aufgabe der vorliegenden Erfindung die Effizienz einer Verkehrslenkung in einem Nachrichtennetz für vermittelte Verbindungen im Falle einer Blockierung in einem Wegabschnitt zwischen zwei Vermittlungsstellen zu verbessern.

Erfindungsgemäß ist diese Aufgabe durch die technische Lehre des Patentanspruchs 1 gelöst.

Vorteilhafterweise kann mit der Anwendung des erfindungsgemäßen Verfahrens eine Abhängigkeit von der Ursprungsvermittlungsstelle und ihrer Anbindung an das Nachrichtennetz vermieden werden, da die Ursprungsvermittlungsstelle je nach Aufbau des Nachrichtennetzes nicht notwendigerweise einen Alternativweg zur Verfügung stellen muß oder der Verbindungsaufbau zunächst eventuell über einen für analoge Signale ausgelegten Wegabschnitt des Nachrichtennetzes durchgeführt wurde, so daß eine wiederholte Verkehrslenkung auch ausgehend von der Ursprungsvermittlungsstelle nicht möglich wäre.

Weitere vorteilhafte Ausgestaltungen der Erfindung sind den abhängigen Patentansprüchen zu entnehmen.

Zum besseren Verständnis der Erfindung ist im folgenden ein Ausführungsbeispiel anhand einer Figur beschrieben.

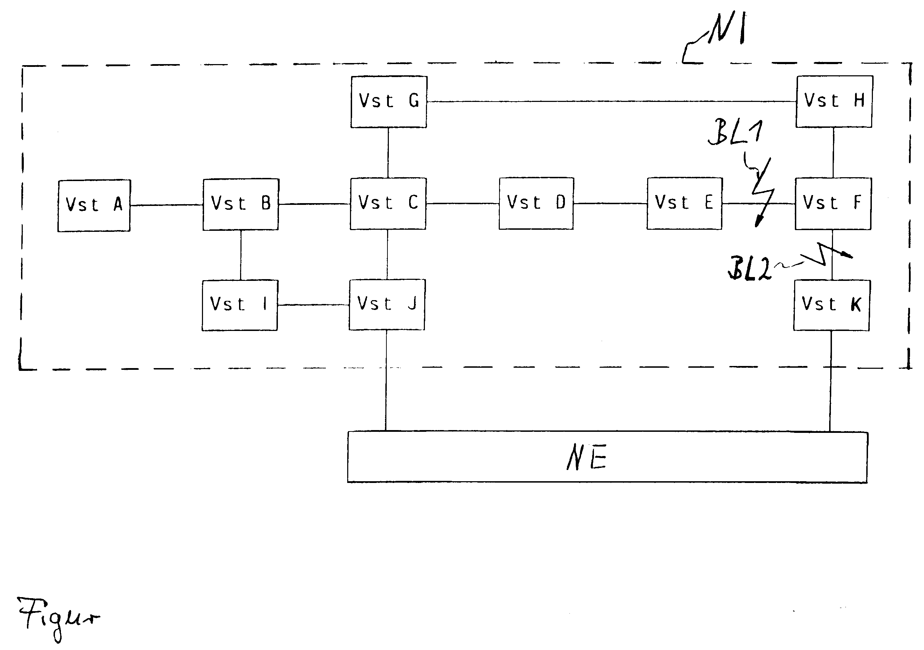

Die Figur zeigt das Ausführungsbeispiel eines Nachrichtennetzes für vermittelte Verbindungen, in dem das erfindungsgemäße Verfahren zur Verkehrslenkung angewendet wird.

Das in der Figur abgebildete Ausführungsbeispiel zeigt ein erstes Nachrichtennetz NI für vermittelte Verbindungen, das mehrere Vermittlungsstellen Vst A bis Vst K enthält. Diese elf Vermittlungsstellen Vst A bis Vst K sind mittels Leitungsbündel in einer festgelegten Weise miteinander verknüpft, so daß sie eine Vermaschung aufweisen. Die Vermittlungsstelle Vst A ist über die Vermittlungsstellen Vst B, Vst C, Vst D und Vst E mit der Vermittlungsstelle Vst F verbunden. Vst B ist weiterhin mit Vst I und diese wiederum mit Vst J verbunden. Vst C ist ebenfalls mit Vst J und zusätzlich mit Vst G verbunden. Vst F ist mit Vst H und Vst K und Vst H weiterhin mit Vst G verbunden. Die Vermittlungsstellen Vst J und Vst K besitzen jeweils einen Anschluß an ein zweites Nachrichtennetz NE für vermittelte Verbindungen. Das erste Nachrichtennetz NI ist im vorliegenden Ausführungsbeispiel ein privates, digitales dienstintegrierendes Nachrichtennetz (ISDN) mit einer Zeichengabe nach dem CCITT-Zeichengabesystem Nr. 7. Das zweite Nachrichtennetz NE ist ein beliebiges öffentliches Nachrichtennetz, dessen Betreiber für die Benutzung Gebühren fordert.

Betrachtet wird zunächst ein erster Verbindungswunsch von einer Ursprungsvermittlungsstelle, im vorliegenden Ausführungsbeispiel Vst A, zu einer Zielvermittlungsstelle, im vorliegenden Ausführungsbeispiel Vst F. Eine Verkehrslenkung zur Bestimmung eines Weges zur Realisierung des Verbindungswunsches, hier mittels einer alternativen Verkehrslenkung, erreicht in allen beteiligten Vermittlungsstellen die Erstwege und es erfolgt ein direkter Verbindungsaufbau von Vst A über die Vermittlungsstellen Vst B, Vst C und Vst D nach Vst E, die hier Durchgangsvermittlungsstellen darstellen. Es sei angenommen, daß zwischen Vst E und Vst F nun eine Blockierung BL1 eintritt. Diese Blockierung BL1 kann während des Verbindungsaufbaus nur in Vst E erkannt werden. Nachdem kein Alternativweg durch Überlaufversuche in Vst E gefunden werden kann, wird die Verbindung mit entsprechendem Auslösegrund (Netzwerkblockierung - network congestion) rückwärts ausgelöst. Dazu wird eine UBM (Unsuccessful Backward Message) -Zeichengabeinformation mit dem entsprechenden, eindeutigen Auslösegrund CAUSE erzeugt und schrittweise von Vermittlungsstelle zu Vermittlungsstelle in Rückwärtsrichtung übertragen. Da bei Auftreten der Blockierung BL1 und Rückübertragung der UBM die Durchgangsvermittlungsstellen Vst C, Vst D und Vst E bezüglich der Zeichengabe nicht bereits transparent durchgeschaltet haben, so kann die UBM mit der Angabe der Auslösegründe in den Durchgangsvermittlungsstellen Vst C, Vst D und Vst E ausgewertet und eine vorhandene Verbindungssteuerung aktiviert werden. Die Auslösegründe können in den Durchgangsvermittlungsstellen für weitere Maßnahmen zum Verbindungsaufbau benutzt werden.

In allen am Verbindungsaufbau beteiligten Vermittlungsstellen werden sämtliche empfangenen und gesendeten, zum Verbindungsaufbau benötigen Ziffern und Informationsdaten, die in einer IAM (Initial Address Message) - und eventuell einer oder mehrerer SAM (Subsequent Address Message) - Zeichengabeinformation enthalten sind, zwischengespeichert und sind somit ebenfalls für weitere Maßnahmen während des Verbindungsaufbaus nutzbar. Diese Ziffern geben insbesondere die Zielvermittlungsstelle Vst F an.

Es ergibt sich somit die Möglichkeit, bei Auslösung der Verbindung in den rückliegenden Durchgangsvermittlungsstellen unter Verwendung der vorhandenen oder regenerierten Daten eine erneute alternative Verkehrslenkung durchzuführen.

Im vorliegenden Ausführungsbeispiel kann die rückliegende Durchgangsvermittlungsstelle Vst D aufgrund des vorgegebenen Aufbaus des ersten Nachrichtennetzes NI keinen Alternativweg zur Verkehrslenkung angeben und gibt die Auslöseinformation rückwärtig zur Durchgangsvermittlungsstelle Vst C weiter. Hier bietet sich ein Alternativweg über die Vermittlungsstelle Vst G an. Wurde dieser Alternativweg beim ersten Verbindungsaufbauversuch durch eine Verbindungsaufbausteuerung wahrgenommen, so wird in Verbindung mit dem empfangenen Auslösegrund CAUSE in der Vst C erneut das Verfahren der alternativen Verkehrslenkung durchgeführt. Dabei ist ein Richtungswechsel zu einer anderen Vermittlungsstelle, hier Vst G, ein maßgebliches Kriterium, da eine erneute Belegung des Wegabschnitts zur Vst D vermieden werden soll. Der zur Blockierung BL1 führende Wegabschnitt Vst C bis Vst E wird ausgelöst und der Wegabschnitt zur Ursprungsvermittlungsstelle Vst A beibehalten. Für den neu einzuschlagenden Wegabschnitt werden die bis dahin für die IAM und die SAM empfangenen Ziffern und Informationsdaten in eine neue, aktualisierte IAM gepackt. Der Alternativweg führt, da keine erneute Blockierung eintritt, über Vst G und Vst H zum Ziel, zur Vst F.

Treten im Nachrichtennetz in mehreren verschiedenen Wegabschnitten, die zur Zielvermittlungsstelle hinführen, Blockierungen ein, so kann sich bei einer dann durchgeführten erhöhten Anzahl von erneuten Durchführungen der alternativen Verkehrslenkung mittels des erfindungsgemäßen Verfahren eine Eigendynamik entwickeln, die zu einer erhöhten Belegung von Verbindungsleitungen führt. Daher wird die Anzahl der erneuten Durchführungen der alternativen Verkehrslenkung beschränkt, so daß die Vermittlungsstellen, die bereits eine festgelegte Anzahl von erneuten Durchführungen der alternativen Verkehrslenkung realisiert haben, bei einer erneuten Blockierung keinen weiteren Versuch zur alternativen Verkehrslenkung unternehmen, sondern mit dem zuvor empfangenen Auslösegrund CAUSE rückwärts auslösen. Bei einer sehr großen Anzahl von Blockierungen verschiebt sich die Durchführung der erneuten alternativen Verkehrslenkung schrittweise zurück zur Ursprungsvermittlungsstelle. Dort kann, falls kein weiterer Alternativweg vorhanden ist, der Aufbau der gewünschten Verbindung endgültig aufgegeben werden.

Als weitere Steuerungsmöglichkeit kann in jeder Vermittlungsstelle des ersten Nachrichtennetzes NI eine Ein- und/oder Abschaltung der Durchführung der erneuten alternativen Verkehrslenkung implementiert sein.

Das erste Nachrichtennetz NI ist im Ausführungsbeispiel ein ISDN. Es ist aber prinzipiell auch möglich, Alternativwege bei der erneuten alternativen Verkehrslenkung über für analoge Signale ausgelegte Verbindungsleitungen zu vermitteln, falls dies die Verkehrslenkung vorsieht.

Betrachtet man nun einen zweiten Verbindungswunsch von Vst A in das öffentliche zweite Nachrichtennetz NE, so versucht die Verkehrslenkung des privaten ersten Nachrichtennetzes NI aus Kostengründen den Aufbau der Verbindung möglichst lange im eigenen Nachrichtennetz zu führen, um einen Ausstieg aus dem ersten Nachrichtennetz zu erreichen, der möglichst nahe an dem Zielbereich des Verbindungswunsches im zweiten Nachrichtennetz NE liegt. Es wird daher ein Nachrichtennetzübergang bei Vst K angestrebt. In dem Wegabschnitt zwischen Vst F und Vst K tritt allerdings eine zweite Blockierung BL2 ein. Die Vst F erkennt diese zweite Blockierung BL2 und löst die Verbindung in Rückwärtsrichtung aus. Wie beim ersten Verbindungwunsch von Vst A nach Vst F ergibt sich auch hier aufgrund einer erneuten alternativen Verkehrslenkung in Vst C ein Alternativweg über Vst J. Der Verbindungswunsch geht nicht verloren.

## Patentansprüche

1. Verfahren zur Verkehrslenkung in einem Nachrichtennetz (NI) für leitungsvermittelte Verbindungen, in dem der Aufbau einer Verbindung zwischen einer Ursprungs- (Vst A) und einer Zielvermittlungsstelle (Vst F) nach dem Verfahren der alternativen Verkehrslenkung schrittweise von der Ursprungsvermittlungsstelle (Vst A) über eine Vielzahl von Durchgangsvermittlungsstellen (Vst B, ..., Vst E, Vst G, Vst H) bis zur Zielvermittlungsstelle (Vst F) durchgeführt wird und in dem bei einer Auslösung der Verbindung in Rückwärtsrichtung während des Verbindungsaufbaus das Verfahren der alternativen Verkehrslenkung erneut schrittweise in wenigstens einer der bereits am Verbindungsaufbau beteiligten Durchgangsvermittlungsstellen (Vst C) angewendet werden kann **dadurch gekennzeichnet,**
- daß während des Verbindungsaufbaus in den am Verbindungsaufbau beteiligten Durchgangsvermittlungsstellen (Vst B, ..., Vst E, Vst G, Vst H) sämtliche empfangenen und gesendeten, zum Verbindungsaufbau benötigten Ziffern und Informationsdaten, die in ersten Zeichengabeinformationen (IAM, SAM) enthalten sind und wenigstens die Zielvermittlungsstelle (Vst F) angeben, zwischengespeichert werden, daß während des Verbindungsaufbaus in den am Verbindungsaufbau beteiligten Durchgangsvermittlungsstellen (Vst B, ..., Vst E, Vst G, Vst H) wenigstens ein Alternativweg festgestellt werden kann,
- daß die auslösende Durchgangsvermittlungsstelle (Vst E) bei der Auslösung der Verbindung während des Verbindungsaufbaus eine die Auslösung kennzeichnende zweite Zeichengabeinformation (UBM) mit einer Angabe eines Auslösegrundes (CAUSE) erzeugt und diese zweite Zeichengabeinformation (UBM) schrittweise von Durchgangsvermittlungsstelle (Vst D, Vst E) zu Durchgangsvermittlungsstelle (Vst C, Vst D) in Rückwärtsrichtung übertragen wird,
- daß die Durchgangsvermittlungsstellen (Vst B, Vst C, Vst D, Vst E) während des Verbindungsaufbaus bezüglich der Zeichengabe nicht transparent durchschalten und daher die die Auslösung kennzeichnende Zeichengabeinformation auswerten können und
- daß diejenige Durchgangsvermittlungsstelle (Vst C), die als erste bei der Auslösung der Verbindung in Rückwärtsrichtung den Alternativweg zur Verfügung stellen kann, erneut das Verfahren der alternativen Verkehrslenkung und eine Teilauslösung der Verbindung in Richtung der Blockierung durchführt.

2. Verfahren nach Anspruch 1, dadurch gekennzeichnet, daß die Anzahl der erneuten Anwendungen des Verfahrens der alternativen Verkehrslenkung in bereits am Verbindungsaufbau beteiligten Durchgangsvermittlungsstellen bei einer Auslösung der Verbindung in Rückwärtsrichtung während des Verbindungsaufbaus begrenzt wird.

3. Verfahren nach Anspruch 1, dadurch gekennzeichnet, daß die erneute Anwendung des Verfahrens der alternativen Verkehrslenkung in wenigstens einer der bereits am Verbindungsaufbau beteiligten Durchgangsvermittlungsstellen bei einer Auslösung der Verbindung in Rückwärtsrichtung während des Verbindungsaufbaus erlaubt oder verboten wird.

4. Verfahren nach Anspruch 1, dadurch gekennzeichnet, daß es in einem nicht vollvermaschten Nachrichtennetz für leitungsvermittelte Verbindungen angewendet wird.

## Claims

1. A process for routing traffic in a communications network (NI) for circuit-switched connections in which the establishment of a connection between an originating exchange (Vst A) and a destination exchange (Vst F) takes place in accordance with the alternative routing method in stepped fashion from the originating exchange (Vst A) to the destination exchange (Vst F) via a plurality of transit exchanges (Vst B,..., Vst E, Vst G, Vst H) and in which, in the event that the connection is released in the backward direction during the connection establishment, the alternative routing can be re-implemented in stepped fashion in at least one of the transit exchanges (Vst C) already participating in the connection establishment, characterised in that
- during the connection establishment all the received and transmitted digits and information data required for the connection establishment, which are contained in first items of signalling information (IAM, SAM) and which indicate at least the destination exchange (Vst F), are intermediately stored in the transit exchanges (Vst B, .., Vst E, Vst G, Vst H) participating in the connection establishment,
- that during the connection establishment at least one alternative route can be determined in the transit exchanges (Vst B, ..., Vst E, Vst G, Vst H) participating in the connection establishment,
- that upon the release of the connection during the connection establishment the releasing transit exchange (Vst E) generates a second item of signalling information (UBM) identifying the release and indicating a release reason (CAUSE), and this second item of signalling information (UBM) is transmitted backwards in stepped fashion from transit exchange (Vst D, Vst E) to transit exchange (Vst C, Vst D),
- that during the connection establishment the transit exchanges (Vst B, Vst C, Vst D, Vst E) are not switched through transparently with respect to the signalling and therefore can evaluate the signalling information identifying the release and
- that the transit exchange (Vst C) which is the first to be able to make the alternative route available upon the release of the connection in the backward direction re-implements the alternative routing and partially releases the connection in the direction of the congestion.

2. A process according to Claim 1, characterised in that the number of re-implementations of the alternative routing in transit exchanges already participating in the connection establishment in the event of a release of the connection in the backward direction during the connection establishment is limited.

3. A process according to Claim 1, characterised in that the re-implementation of the alternative routing in at least one of the transit exchanges already participating in the connection establishment in the event of a release of the connection in the backward direction during the connection establishment is permitted or prohibited.

4. A process according to Claim 1, characterised in that it is used in a communications network for circuit-switched connections which is not fully meshed.

## Revendications

1. Procédé de reroutage dans un réseau de communication (NI) pour liaisons à commutation de lignes dans lequel l'établissement d'une liaison entre un point de commutation source (Vst A) et un point de commutation cible (Vst F) est réalisé selon le procédé du reroutage alternatif par étapes depuis le point de commutation source (Vst A) jusqu'au point de commutation cible (Vst F) en passant par un grand nombre de points de commutation de transit (Vst B, ..., Vst E, Vst G, Vst H) et dans lequel, pour une libération de la liaison dans le sens inverse pendant l'établissement de la liaison, le procédé de reroutage alternatif peut être utilisé de nouveau par étapes dans au moins un des points de commutation de transit (Vst C) participant déjà à l'établissement de la liaison, caractérisé en ce que
- pendant l'établissement de la liaison dans les points de commutation de transit (Vst B, ..., Vst E, Vst G, Vst H) participant à l'établissement de la liaison, tous les chiffres et toutes les données d'information reçus et envoyés, nécessaires à l'établissement de la liaison, qui sont contenus dans des premières informations de signalisation (IAM, SAM) et qui indiquent au moins le point de commutation cible (Vst F), sont mémorisés de façon intermédiaire, en ce que, pendant l'établissement de la liaison dans les points de commutation de transit (Vst B, ..., Vst E, Vst G, Vst H) participant à l'établissement de la liaison, au moins un trajet alternatif peut être constaté,
- le point de commutation de transit entraînant la libération (Vst E), lors de la libération de la liaison pendant l'établissement de la liaison, produit une deuxième information de signalisation (UBM) caractérisant la libération, avec une indication du motif de libération (CAUSE) et en ce que cette deuxième information de signalisation (UBM) est transmise par étapes de point de commutation de transit (Vst D, Vst E) en point de commutation de transit (Vst C, Vst D) en sens inverse.
- les points de commutation de transit (Vst B, Vst C, Vst D, Vst E) ne commutent pas de façon transparente pendant l'établissement de la liaison en ce qui concerne la signalisation et peuvent par conséquent analyser l'information de signalisation caractérisant la libération et
- en ce que le point de commutation de transit (Vst C) qui est le premier à pouvoir, lors de la libération de la liaison en sens inverse, mettre à disposition le trajet alternatif, réalise de nouveau le procédé du reroutage alternatif et une libération partielle de la liaison dans la direction du blocage.

2. Procédé selon la revendication 1, caractérisé en ce que le nombre des utilisations renouvelées du procédé de reroutage alternatif dans des points de commutation de transit participant déjà à l'établissement de la liaison lors d'une libération de la liaison dans le sens inverse est limité pendant l'établissement de la liaison.

3. Procédé selon la revendication 1, caractérisé en ce que l'utilisation renouvelé du procédé de reroutage alternatif dans au moins un des points de commutation de transit participant déjà à l'établissement de la liaison lors d'une (libération de la liaison dans le sens inverse est permise ou interdite.

4. Procédé selon la revendication 1, caractérisé en ce qu'il est utilisé dans un réseau de communication non totalement maillé pour des liaisons à commutation de lignes.
